# EUROPEAN PATENT SPECIFICATION

(11) **EP 1 665 845 B1**
(45) Date of publication and mention of the grant of the patent: **09.06.2010**
(21) Application number: 03818510.4
(22) Date of filing: 08.09.2003
(51) Int. Cl.: H04W 88/02, H04M 1/60, H04B 1/38

(54) **AUTOMOTIVE MOBILE TERMINAL CONNECTION SYSTEM PROVIDING MOBILE TERMINAL FUNCTION TO ENABLE DYNAMIC EXTERNAL USER INTERFACE**
AUTOMOTIVE-MOBIL-ENDGERÄT-VERBINDUNGSSYSTEM ZUR BEREITSTELLUNG VON MOBIL-ENDGERÄTEFUNKTION ZUR ERMÖGLICHUNG EINER DYNAMISCHEN EXTERNEN BENUTZEROBERFLÄCHE
SYSTEME DE RACCORDEMENT DE TELEPHONE PORTABLE POUR VEHICULES AUTOMOBILES INTEGRANT UNE MISE A JOUR DYNAMIQUE DE L'INTERFACE UTILISATEUR EXTERNE

(43) Date of publication of application: 07.06.2006
(73) Proprietor: Nokia Corporation, 02150 Espoo (FI)
(72) Inventor: PIETRUSZKA, Jörg, 44809 Bochum (DE); SPILKER, Jochen, 48163 Münster (DE); HANEBRINK, Thomas, 44799 Bochum (DE)
(74) Representative: Becker Kurig Straus
(86) International application number: PCT/IB2003/003819
(87) International publication number: WO 2005/025256

(56) References cited:
- EP-A2- 0 723 378
- WO-A1-03/001694
- WO-A2-02/096070
- US-A- 5 535 274
- US-B1- 6 349 223

## Description

The present invention relates to an automotive connection system to integrate a mobile phone terminal into the phone control systems of a car. More specifically, it relates to an connection system that is suitable to obtain and provide information about the mobile terminal function capabilities, thereby making it possible to build a corresponding user interface matching the specific features of the mobile terminal.

As mobile terminals like mobile phones and PDAs have become very popular, the desire has aroused to use such terminals in a vehicle environment. Because usually the vehicles driver is the main user of the terminal, the necessity exists to operate the terminal in a kind of hands free mode. To minimize the risks of using a mobile terminal during driving that are mainly due to the distraction caused by operating a terminal while at the same time controlling the car, different holder devices have been constructed. These range from rather simple mechanical holders, whose only purpose is to place the mobile terminal in an optimal position to the driver, to very sophisticated devices. The latter ones utilize certain internal car systems like the audio system, displays like those belonging to a navigation system, or controls, for example buttons placed on the steering wheel. The speakers of the audio system may so be used for playback purposes, while installed controls may suit to operate the terminal instead of using the terminals own controls.

These common mobile terminal car integration kits suffer from one major drawback that is interoperability. Integrating such kits into a car might be a quite expensive and complicated task. Since they have to be adapted both to the specific type of car and the type of terminal, an obvious problem arises. While the average lifespan of a car may be about 10 years or more, typical product cycles of mobile terminals are much shorter, at best about 1-3 years. Buying a new terminal from the same manufacturer or even from a different manufacturer will most certainly lead to also purchasing a new car integration kit. That is because such kits, the more sophisticated they are, the more likely, they are adapted to both the proprietary communication protocol of the corresponding terminal and the also proprietary communication protocol of the car, or in other words the central car controller. So a new mobile terminal will almost certainly not fit into an already installed integration kit, neither mechanically nor electrically. Since the costs of such a kit are considerably high, installing a new integration kit will not be easily accepted by a user. Neither may he want to accept to be forced to further use a terminal that is far off the state of the art, just to keep the already installed integration kit.

To overcome this drawback, different approaches have been made. One of the easiest ways may be to include only functions in the integration kit that are common to most terminals, like taking a call or hanging up, and using a kind of simple universal holder. Obviously this would give the user only very restricted possibilities to use more sophisticated features of both the terminal and the internal systems of the car. So the logical next step was using kits containing a part specific to a certain car and comprising a universal connector to connect with a terminal specific holder. For each type of mobile terminal a specific holder or cradle has been used which possesses a corresponding universal connector fitting into that of the integration kit. This cradle may be equipped to translate between the car specific part of the kit and the mobile terminal, i.e. converting the communication protocol of one to another.

WO 02/096070 A2 relates to wireless communications relative to a vehicle using a wireless communications device, a pocket for holding the wireless communication device and a docking station in communication with the pocket. The pocket and docking station form a docking assembly. The docking station is capable of identifying the particular model of wireless communications device held by the pocket, in order to select an appropriate command set or set of electrical characteristics for use in interacting with the wireless communications device.

US 5,535,274 relates to a cellular telephone interconnected to a host assembly via a cable. The cable contains both appropriate interdisciplinary connections for attachment to the telephone at one end and to the host assembly at the other end via a universal connector. The identity of the particular cellular telephone can be provided to the host assembly by a number of different protocols including the downloading of function-related parameters to the host assembly that are unique to the particular telephone. The host assembly can function with any one of a variety of cellular telephones having differently configured cable connections. According to one embodiment, a pocket adapter holds the cellular telephone and includes the universal connector.

Though lacking the possibility to make use of more sophisticated features, this may already seem to be a solution to the problem of interoperability. But some details are not yet solved completely satisfactory. A crucial step is to communicate with the mobile terminal by the cradle. As of today, this is done in a kind of passive manner, i.e. that the cradle waits for data sent by the terminal. This could be information about an incoming call or message, or the signal that the user has successfully entered the correct PIN number on the terminal for example. Since types of terminals exist that do not show such a behavior, i.e. that are not sending information automatically, this method will not work in every possible combination of integration kit and mobile terminal. If the terminal does not automatically send required information to the cradle, the kit will wait forever for needed data.

Also, provided that the car specific part of the kit provides all functionality that the cars control and display systems can offer, certainly not all types of terminal will support all these functions. If the user tries to use one of the functions offered by the kit but not supported by the actual terminal, unwanted reactions may occur. In the best case the kit will send back an error message informing the user that the wanted function is not available with this terminal. Second best would be to simply ignore the user request. In the worst possible case this will lead to a malfunction of the terminal. Anyone of these possibilities is unwanted. If a user tries to use a function that seems to be present to him, he expects that it can be used. He certainly will not understand why a function is offered to him that cannot be used though. With regard to easy understanding of the operation this is quite undesirable and should be avoided at all.

In order to adapt the car specific part of the kit to the special features of the mobile terminal and make the mobile terminal interoperable with systems of the car, information about the function capabilities of the terminal has to be provided.

So obviously, the need for a mobile terminal car connection system exists, that incorporates the advantages already achieved by state of the art devices but avoids the aforementioned drawbacks. The objects of the present invention are thus to provide a mobile terminal car connection system that is completely interoperable with both internal car systems and present or future terminals from the same or even different manufacturers. That means a system that offers all functions to the user that are actually usable in a given combination of car and mobile terminal. And also one that is easily upgradable with minimal costs that may be caused by a change of the mobile terminal used.

To achieve the aforementioned objects, the present invention provides a method according to claim 1, a device according to claim 8, a system according to claim 13 and a computer program product according to claim 7.

According to an aspect of the present invention a method is provided to adapt a phone functionality matrix of an automotive mobile terminal connection device to function capabilities supported by a mobile terminal device connected to the automotive mobile terminal connection device. The method comprises the steps of:
- receiving data containing an indication about the function capabilities supported by the mobile terminal device; and
- rewriting the phone functionality matrix according to the received data.

It is preferred that the data containing an indication about said function capabilities supported by said mobile terminal device is received from a mobile terminal cradle. Since the mobile terminal cradle has to be specifically adapted to a certain type of mobile terminal device, it may also provide the data containing an indication about said function capabilities and thus send that data.

It is preferred that the automotive mobile terminal connection device requests the data from the mobile terminal device. The automotive mobile terminal connection device may easily request that data utilizing for example standard AT commands common to GSM mobile phones.

It is preferred that the data containing an indication of said function capabilities is received from the mobile terminal device by requesting type and software version thereof. Though this may require occasional software upgrades for the automotive mobile terminal connection device this is a way which is easy to implement to determine the function capabilities of the mobile terminal device.

It is preferred that the data containing the indication of the function capabilities is provided to the automotive mobile terminal connection device by the mobile terminal cradle. The cradle derives type and software version from the mobile terminal device. This may especially be useful if a cradle is adapted to several mobile phones belonging to the same series, i.e. having the same bottom connector and interface protocol, but different function capabilities. Thus the cradle has to derive the supported function capabilities from type and software version of the mobile phone actually connected.

It is preferred that the functionality matrix is sent to a central car controller to enable the central car controller to build a user interface corresponding to the functionality matrix. Since the central car controller is aware of the features of systems of the car, like those of controls and display systems for example, it is the device which is responsible for building a user interface. And thus data need to be provided to enable it to adapt this user interface to correspond to the function capabilities of the mobile terminal.

According to another aspect of the present invention, an automotive mobile terminal connection device is provided. The automotive mobile terminal connection device comprises an interface suitable to connect with a central car controller and a connector to connect with a mobile terminal cradle which is adapted for physically receiving a mobile terminal device. It is characterized by a phone functionality matrix which reflects function capabilities of said mobile terminal device and in that said automotive mobile terminal connection device is adapted for receiving data containing an indication about function capabilities supported by said mobile terminal device, rewriting said phone functionality matrix according to said received data, and sending said functionality matrix to said central car controller to enable said central car controller to build a user interface corresponding to said functionality matrix.

It is preferred that the automotive mobile terminal connection device is adapted to request data from the mobile terminal device containing an indication of the function capabilities. As described before, utilizing for instance standard GSM AT commands, this would be a flexible way to derive the function capabilities of the mobile terminal device.

It is preferred that the automotive mobile terminal connection device is adapted to request the data containing the indication about the function capabilities of the mobile terminal device from the mobile terminal cradle. As also described before, the mobile terminal cradle would be an ideal location to store or otherwise provide information about the function capabilities of the mobile terminal device.

It is preferred that the automotive mobile terminal connection device is adapted to request type and software version of the mobile terminal device. As described before, this is an easy way to derive the function capabilities of the mobile terminal device, even though it has considerable disadvantages.

According to yet another aspect of the present invention a mobile terminal cradle for physically receiving a mobile terminal device is provided. It comprises a connector adapted to connect to an automotive mobile terminal connection device, an interface device adapted to request user data from and send user data to the mobile terminal device. That means the cradle is adapted to actively request user data that may not be automatically provided by the mobile terminal device. This might be information about incoming messages or calls for example. One might also say that the cradle actively supports the communication with the automotive mobile terminal connection device.

It is preferred that the mobile terminal cradle is adapted to request data from the mobile terminal device containing an indication about function capabilities of the mobile terminal device. That means that the cradle is enabled to actively obtain information about the functions supported by the mobile terminal device. This is useful for types of mobile terminals that do not provide such information automatically.

It is preferred that the mobile terminal cradle comprises a storage which contains an indication about the function capabilities of the mobile terminal device. Since the cradle has to be specifically adapted to a certain type of mobile terminal device anyway, it is only logical to store information about the functions supported by that particular mobile terminal device in here.

It is preferred that the mobile terminal cradle comprises a processor adapted to convert a communication protocol of the mobile terminal device into a communication protocol supported by the automotive mobile terminal connection device. That way, different types of mobile terminals may be used with the same automotive mobile terminal connection device, each having its own cradle. The communication protocols of different mobile terminal devices can so be translated to the automotive mobile terminal connection device.

It is preferred that the mobile terminal cradle comprises a charger adapted to charge the battery of the mobile terminal. It should be obvious that is it comfortable to also provide a power source to the terminal which is part of the cradle, instead of a separate charging device.

It is preferred that the mobile terminal cradle is adapted to simulate a predetermined type of mobile terminal device to said automotive mobile terminal connection device. That means, for the automotive mobile terminal connection device it seems as if always the same predetermined type of mobile terminal device is connected to the cradle, regardless of the type of mobile terminal device actually connected. This may be desirable, because thus the adaptation could be made easier, while at the same time losing some level of interoperability. If the type of terminal corresponding to this unified functionality only supports few features, some more sophisticated features of the terminal actually connected would be lost. While otherwise, if the terminal actually connected supports less features than the terminal corresponding to the unified functionality the problem of presenting unusable features through the cars system would come up again. In certain circumstances this may though be a useful possibility.

The accompanying drawings are included to provide a further understanding of the invention and are incorporated in and constitute a part of this specification. The drawings illustrate embodiments of the present invention and serve, together with the description, to explain the principles of the invention. In the drawings,
Fig. 1 schematically illustrates an embodiment of the present invention;
Fig. 2 illustrates another embodiment of the present invention;
Fig. 3 illustrates another embodiment of the present invention; and
Fig. 4 illustrates yet another embodiment of the present invention.

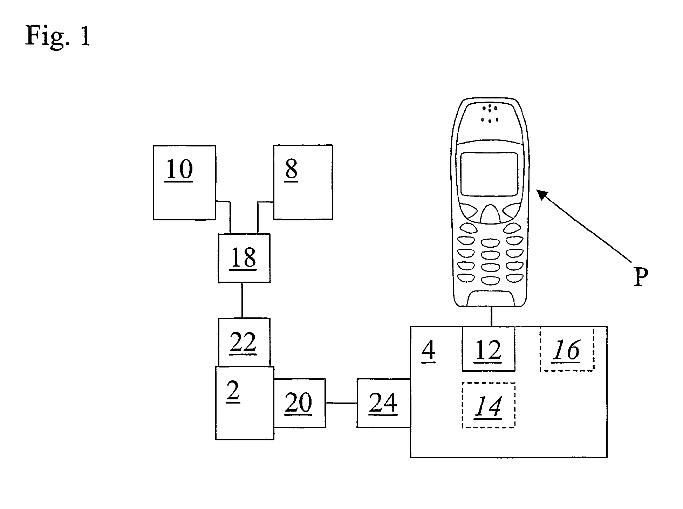

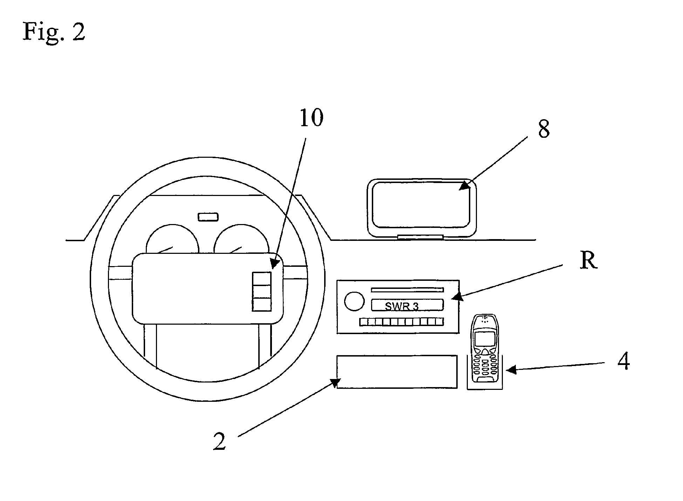

In fig. 1 a mobile terminal car connection system according to the invention is schematically illustrated. A mobile terminal P is electrically connected to a cradle 4, in a bi-directional way, through an interface 12. So the terminal P can send data to be received by the cradle 4, and vice versa. The cradle 4 is connected with an automotive mobile terminal connection device 2. Cradle 4 and automotive mobile terminal connection device 2 are interconnected also in a bi-directional way, through connector 20 being part of the automotive mobile terminal connection device 2, and connector 24 being part of the cradle 4. Those two connectors 20 and 24 are standardized connectors, meaning that every cradle 4 equipped with a connector 24 can be connected to the automotive mobile terminal connection device 2. If the terminal P is a Nokia^{®} mobile terminal, no processing of data received from the terminal P is necessary, because the automotive mobile terminal connection device 2 supports the Nokia^{®} proprietary communication protocol. The cradle 4 may optionally contain a processor 14, in case the cradle 4 is adapted for a non-Nokia^{®} mobile terminal. The processor 14 translates data sent by the mobile terminal device P into the Nokia^{®} protocol. In case a Nokia^{®} terminal is connected to the mobile terminal connection device and no processing of data received from the terminal P is necessary and cradle 4 and/or processor 14 are thus not needed, a direct cable connection from automotive terminal connection device 2 to the mobile terminal P can be used. The automotive mobile terminal connection device 2 is bi-directionally connected with a central car controller 18 through an interface 22. The central car controller 18 is connected to an internal car display system 8 and internal car controls 10. Car controls 10 could be control buttons on the steering wheel (as shown in fig. 2), or control keys of an integrated navigation system or the like. Those are connected bi-directionally with the automotive mobile terminal connection device 2 through central car controller 18 and interface 22, in order to send control commands given through the control keys to be handled by the terminal P and to receive feedback from the terminal P, for instance in order to light an LED in a control key after a function has been switched on. The cradle 4 may optionally include a charger 16, which is adapted to charge the battery of the mobile terminal device P.

In fig. 2 a typical configuration of the present invention is illustrated. Only the parts that may be visible to the user are shown here, while connections and other parts usually hidden are not shown. A mobile terminal device P is physically received in a cradle 4 and releasable attached thereto. The cradle 4 can be mounted in a position that is suitable, dependant on whether the terminals display and control keys are to be used, and if the terminals speakers or those belonging to the cars audio system will be used. An automotive mobile terminal connection device 2 can be mounted either visibly in a radio mounting slot or the like, or hidden in the glove box for example, provided the necessary connection with the cradle 4 is ensured. The cars radio system R may be utilized to control the terminal P and serve as a replacement of the terminals own display, if the radio system R is suitably equipped. Control buttons 10, for example incorporated into the steering wheel, may suit the purpose of controlling the terminals functions, while a display device 8, being for instance part of the cars navigation system, may also serve to act as a replacement for the terminals display.

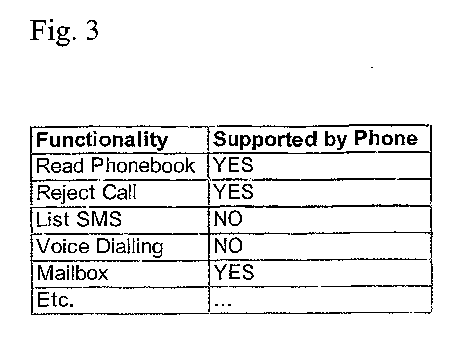

In fig. 3 a possible functionality matrix is shown. In this case said matrix is rather simple, only containing certain features and the information if a mobile terminal can support them or not. It would easily be possible to expand the matrix, for example to give information not only if, but also how or in other words in what way or to what degree certain features are supported by the mobile terminal. For example for the cell "List SMS", possible entries could then be "in order of receiving", "in alphabetical order", "only from persons in the phonebook" and the like. That way, a very fine-tuned matrix could be derived, to be provided to the central car controller in order to build a sophisticated user interface taking advantage of all the advanced features of the mobile terminal.

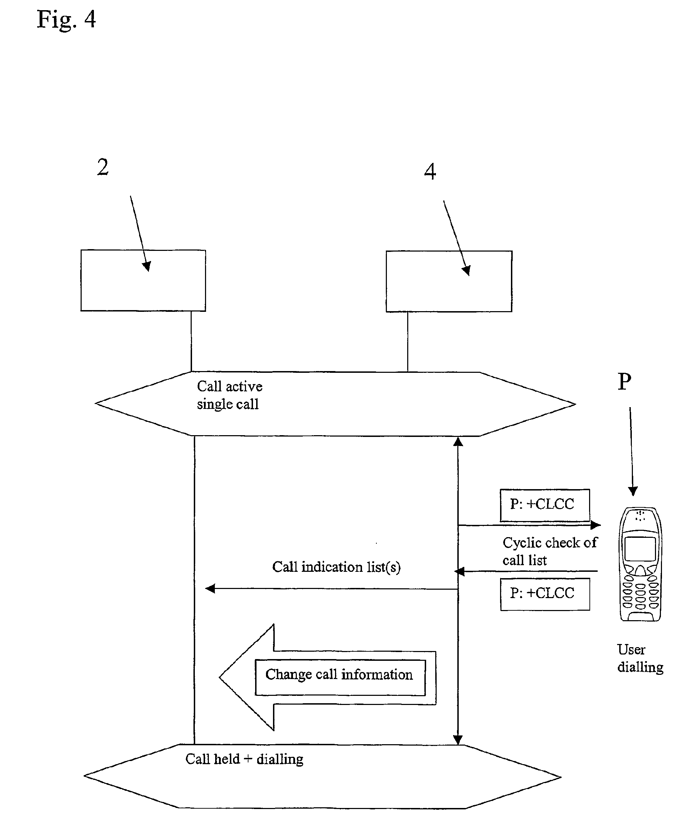

In fig. 4 a schematic diagram about second call initiation is illustrated. The automotive mobile terminal connection device 2 and the cradle 4 are shown, also a mobile phone P. Manual dialing on the mobile phone P is possible directly with an active single call or after separately putting the active call on hold. State changes after user operations on the mobile phone P are only detectable from cyclic checking of the call list (CLCC).

There are two major kinds of data exchanged between the mobile terminal device, the cradle and the automotive mobile terminal connection device of the present invention. On the one hand there is so-called user data. This can be either the contents of an SMS message, information about an incoming call or the like, sent from the mobile terminal device. Or user data that is sent to the mobile terminal device, for example commands like establishing a mobile connection, in other words dialing, changing the ring tone or the like. User data is thus sent in both directions from and to the mobile terminal device. On the other hand there is data containing an indication about functions supported by the mobile terminal. This kind of data is only sent in the direction from the mobile terminal device to the automotive mobile terminal connection device, either automatically or requested by the mobile terminal cradle oder the automotive mobile terminal connection device.

Examples for user data that is either received or has to be requested are:
- Indication of entering a PIN number:
   The automotive mobile terminal connection device needs information about if the user has already entered his PIN to begin its operation. Some phones (type A) send a message through the bottom connector that the correct PIN number has been entered. Other phone types (type B) make it necessary to request a confirmation about if the PIN has been correctly entered. In the sense of the present invention the automotive mobile terminal connection device for example waits constantly for the confirmation of having entered the PIN. If a phone of type A with a corresponding cradle is installed, the cradle will wait for such corresponding message and send this message (maybe with a correspondingly adapted command) to the automotive mobile terminal connection device. In the case that a phone of type B is installed with the corresponding cradle, the cradle will periodically send a request to the phone, to obtain information if the PIN has been entered. If the phone of type B confirms this, the cradle will send a message indicating this to the automotive mobile terminal connection device. This message is identically to that sent with a phone of type A.
- Displaying incoming messages (SMS, MMS, Email and the like):
   similar to the aforementioned examples the phone may signal incoming messages and/or output them automatically, or the cradle has to periodically request information about whether a message has come in and relay that information.

Example for user data which has to be requested:
- Requesting the phonebook of the mobile phone:
   In this case it is provided that the automotive mobile terminal connection device is adapted to display the phonebook through a display system of the car. The output of the phonebook through the bottom connector is different between mobile phones from different manufacturers or even with phones from the same manufacturer belonging to different series. According to the present invention the automotive mobile terminal connection device may for example expect that the phonebook is outputted in an alphabetical order and in a certain format. If the phonebook is sent in alphabetical order by a phone of type A, the corresponding data in principle only has to be relayed to the automotive mobile terminal connection device. If a phone of type B outputs the entries of its phonebook unsorted and in another format, the cradle will have to first sort the data and convert the format, before the data can be send to the automotive mobile terminal connection device.

There are different possibilities for the automotive mobile terminal connection device to obtain the needed information about a terminal's function capabilities or features, in order to adapt the functional matrix. The automotive mobile terminal connection device may utilize standard GSM AT commands to request the features of the mobile terminal. This is an elegant and flexible way to obtain that information since GSM is a widely accepted standard for mobile communication and the AT commands are supported by most of the GSM mobile terminals. Another possible, but certainly not as flexible manner to obtain the needed data could be to request type and software version of the mobile terminal. With this information at hand, the automotive mobile terminal connection device could derive which features are supported performing a kind of database lookup. The obvious disadvantage of such a method is that of necessary software updates for future terminals whose interface and other details are not yet known. Without such updates of the internal database, the automotive mobile terminal connection device would not be able to recognize terminals new to the market. If new terminals are purchased in short periods of time and/or if a larger number of terminals are to be used with the same car, of different family members for example, this can cause unacceptable costs and efforts. Using one of the aforementioned ways, the automotive mobile terminal connection device is used to obtain the features of the mobile terminal by itself.

A different yet also logical approach is to use the cradle to obtain the needed information about the terminals features. Since a cradle has to be adapted specifically to a certain type of terminal, this is a rather obvious solution. The information may either be hardcoded into the cradles circuit, if only one type of terminal is to be used with the cradle. Or for example a cradle suitable for a series of terminals from the same manufacturer with the same mechanical and electrical properties but different features is utilized. In this case there are methods known in the art that can be implemented to enable the cradle to determine the actual type or software version of the terminal and thus store the right list of features. If the terminal uses a standardized connection protocol, like the Bluetooth hands free protocol (HFP) for example, the cradle can derive the needed information about supported features from the kind of connection with the terminal either. Using one of the aforementioned ways, the cradle is used to provide data containing an indication of the features of the mobile terminal.

The present invention suggests an automotive mobile terminal connection system, adaptable to different mobile terminal devices via a terminal specific cradle connectable to the automotive mobile terminal connection device via a universal connector. So when different persons are using the same car possessing also different mobile terminal devices, each of them may use the connection system by simply utilizing a cradle adapted for his or her type of terminal device. Using future mobile terminal devices is thus possible by only replacing the cradle without the cost-intensive need to replace other parts of or even the whole equipment. The cradle is able to obtain data from the mobile terminal device which is not sent by the mobile terminal by itself. This includes user data as well as data containing an indication of the function capabilities of the mobile terminal device. I.e. the cradle actively supports communication between the automotive mobile terminal connection device and the mobile terminal device. The automotive mobile terminal connection device can adapt a matrix to match the function capabilities of the mobile terminal device, in order to provide this matrix to the central car controller. The central car controller can thus build a corresponding user interface, which offers only functions to the user that are both supported by the mobile terminal device and that can be controlled and/or displayed through one of the cars control or display systems. This eliminates incorrect operation and confusion of the user, and thus increases ease of use and comfort.

## Claims

1. Method, comprising
- adapting a phone functionality matrix of an automotive mobile terminal connection device to function capabilities of a mobile terminal device connected to said automotive mobile terminal connection device by
- receiving data containing an indication about said function capabilities supported by said mobile terminal device;
- rewriting said phone functionality matrix according to said received data; and
- sending said functionality matrix to a central car controller to enable said central car controller to build a user interface corresponding to said functionality matrix.

2. Method according to claim 1, wherein said data containing said indication of said function capabilities is received from a mobile terminal cradle.

3. Method according to claim 1, wherein said data containing said indication of said function capabilities is received from said mobile terminal device.

4. Method according to anyone of the preceding claims, further comprising
- requesting said data containing said indication of said function capabilities from said mobile terminal device.

5. Method according to anyone of the preceding claims, wherein said data containing said indication of said function capabilities is received from said mobile terminal device by requesting type and software version thereof.

6. Method according to anyone of claims 2, 4 or 5, when dependent on claim 2, wherein said data containing said indication of said function capabilities is provided to said automotive mobile terminal connection device by said mobile terminal cradle which derives type and software version from said mobile terminal device.

7. Computer program product comprising program code means stored on a computer readable medium for carrying out the method of anyone of the preceding claims when said program product is run on a computer or network device.

8. Automotive mobile terminal connection device, comprising
- an interface (22) adapted to connect with a central car controller (18);
- a connector (20) adapted to connect with a mobile terminal cradle which is adapted for physically receiving a mobile terminal device, or with a direct cable connection to a mobile terminal device;
**characterized**
**by** a phone functionality matrix which comprises an indication of function capabilities of said mobile terminal device; and
in that said automotive mobile terminal connection device is adapted for
- receiving data containing an indication about function capabilities supported by said mobile terminal device;
- rewriting said phone functionality matrix according to said received data; and
- sending said functionality matrix to said central car controller to enable said central car controller to build a user interface corresponding to said functionality matrix.

9. Automotive mobile terminal connection device according to claim 8, adapted to request data from said mobile terminal device, said data containing an indication of said function capabilities.

10. Automotive mobile terminal connection device according to claim 8 or 9, adapted to request said data containing said indication about said function capabilities of said mobile terminal device from said mobile terminal cradle.

11. Automotive mobile terminal connection device according to claim 8 or 9, adapted to request said data containing said indication about said function capabilities of said mobile terminal device from said mobile terminal device.

12. Automotive mobile terminal connection device according to anyone of claims 8 to 10, adapted to request type and software version of said mobile terminal device.

13. System, comprising
- an automotive mobile terminal connection device according to anyone of claims 8 to 12; and
- a mobile terminal cradle for physically receiving a mobile terminal device, comprising a connector (24) adapted to connect to said automotive mobile terminal connection device and an interface device (12) adapted to request data from and send data to said mobile terminal device.

14. System according to claim 13, adapted to request data from said mobile terminal device, said data containing an indication about function capabilities of said mobile terminal device.

15. System according to anyone of claims 13 to 14, comprising a storage containing an indication about said function capabilities of said mobile terminal device.

16. System according to anyone of claims 13 to 15, **characterized by** a processor (14) adapted to convert a communication protocol of said mobile terminal device into a communication protocol supported by said automotive mobile terminal connection device.

17. System according to anyone of claims 13 to 16, **characterized by** a charger (16) adapted to charge the battery of said mobile terminal.

18. System according to anyone of claims 13 to 17, adapted to provide a predetermined type of mobile terminal interface to said automotive mobile terminal connection device irrespective of the interface of the connected mobile terminal device.

## Patentansprüche

1. Verfahren, umfassend:
- Anpassen einer Telefon-Funktionsmatrix einer automobilen Verbindungsvorrichtung für ein mobiles Endgerät an Funktionsfähigkeiten einer mobilen Endgerätevorrichtung, die mit der automobilen Verbindungsvorrichtung für ein mobiles Endgerät verbunden ist, durch
- Empfangen von Daten, die eine Angabe über die Funktionsfähigkeiten enthalten, die von der mobilen Endgerätevorrichtung unterstützt werden;
- Neuschreiben der Telefon-Funktionsmatrix gemäß den empfangenen Daten;
und
- Senden der Funktionsmatrix an eine zentrale Fahrzeugsteuerung, um es der zentralen Fahrzeugsteuerung zu ermöglichen, eine Benutzerschnittstelle entsprechend der Funktionsmatrix zu erzeugen.

2. Verfahren nach Anspruch 1, wobei die Daten, welche die Angabe der Funktionsfähigkeiten enthalten, von einer Halterung für ein mobiles Endgerät empfangen werden.

3. Verfahren nach Anspruch 1, wobei die Daten, welche die Angabe der Funktionsfähigkeiten enthalten, von der mobilen Endgerätevorrichtung empfangen werden.

4. Verfahren nach einem der vorhergehenden Ansprüche, weiter umfassend
- Anfordern der Daten, welche die Angabe der Funktionsfähigkeiten enthalten, von der mobilen Endgerätevorrichtung.

5. Verfahren nach einem der vorhergehenden Ansprüche, wobei die Daten, welche die Angabe der Funktionsfähigkeiten enthalten, von der mobilen Endgerätevorrichtung empfangen werden, indem Typ und Softwareversion davon angefordert werden.

6. Verfahren nach einem der Ansprüche 2, 4 oder 5, wenn abhängig von Anspruch 2, wobei die Daten, welche die Angabe der Funktionsfähigkeiten enthalten, der automobilen Verbindungsvorrichtung für ein mobiles Endgerät von der Halterung des mobilen Endgeräts bereitgestellt werden, welche Typ und Softwareversion von der mobilen Endgerätevorrichtung ableitet.

7. Computerprogrammprodukt, umfassend Programmcodemittel, die auf einem computerlesbaren Medium gespeichert sind, zum Ausführen des Verfahrens von irgendeinem der vorhergehenden Ansprüche, wenn das Programmprodukt auf einem Computer oder einer Netzwerkvorrichtung ausgeführt wird.

8. Automobile Verbindungsvorrichtung für ein mobiles Endgerät, umfassend:
- eine Schnittstelle (22), die angepasst ist, mit einer zentralen Fahrzeugsteuerung (18) verbunden zu werden;
- eine Verbindungseinrichtung (20), die angepasst ist, mit einer Halterung eines mobilen Endgeräts, die dazu angepasst ist, eine mobile Endgerätevorrichtung körperlich aufzunehmen, oder mit einer direkten Kabelverbindung mit einer mobilen Endgerätevorrichtung verbunden zu werden;
**gekennzeichnet**
- **durch** eine Telefon-Funktionsmatrix, die eine Angabe von Funktionsfähigkeiten der mobilen Endgerätevorrichtung umfasst;
und **dadurch**, dass die automobile Verbindungsvorrichtung für ein mobiles Endgerät angepasst ist zum
- Empfangen von Daten, die eine Angabe über die Funktionsfähigkeiten enthalten, die von der mobilen Endgerätevorrichtung unterstützt werden;
- Neuschreiben der Telefon-Funktionsmatrix gemäß den empfangenen Daten;
und
- Senden der Funktionsmatrix an die zentrale Fahrzeugsteuerung, um es der zentralen Fahrzeugsteuerung zu ermöglichen, eine Benutzerschnittstelle entsprechend der Funktionsmatrix zu erzeugen.

9. Automobile Verbindungsvorrichtung für ein mobiles Endgerät nach Anspruch 8, angepasst zum Anfordern der Daten von der mobilen Endgerätevorrichtung, wobei die Daten eine Angabe der Funktionsfähigkeiten enthalten.

10. Automobile Verbindungsvorrichtung für ein mobiles Endgerät nach Anspruch 8 oder 9, angepasst zum Anfordern der Daten, welche die Angabe über die Funktionsfähigkeiten der mobilen Endgerätevorrichtung enthalten, von der Halterung des mobilen Endgeräts.

11. Automobile Verbindungsvorrichtung für ein mobiles Endgerät nach Anspruch 8 oder 9, angepasst zum Anfordern der Daten, welche die Angabe über die Funktionsfähigkeiten der mobilen Endgerätevorrichtung enthalten, von der mobilen Endgerätevorrichtung.

12. Automobile Verbindungsvorrichtung für ein mobiles Endgerät nach irgendeinem der Ansprüche 8 bis 10, angepasst zum Anfordern von Typ und Softwareversion der mobilen Endgerätevorrichtung.

13. System, umfassend:
- eine automobile Verbindungsvorrichtung für ein mobiles Endgerät nach irgendeinem der Ansprüche 8 bis 12; und
- eine Halterung eines mobilen Endgeräts zum körperlichen Aufnehmen einer mobilen Endgerätevorrichtung, umfassend eine Verbindungseinrichtung (24), die angepasst ist, um mit der automobilen Verbindungsvorrichtung für ein mobiles Endgerät verbunden zu werden, und eine Schnittstellenvorrichtung (12), die angepasst ist, Daten von der mobilen Endgerätevorrichtung anzufordern und Daten an die mobile Endgerätevorrichtung zu senden.

14. System nach Anspruch 13, angepasst zum Anfordern der Daten von der mobilen Endgerätevorrichtung, wobei die Daten eine Angabe der Funktionsfähigkeiten der mobilen Endgerätevorrichtung enthalten.

15. System nach irgendeinem der Ansprüche 13 bis 14, umfassend einen Speicher, der eine Angabe über die Funktionsfähigkeiten der mobilen Endgerätevorrichtung enthält.

16. System nach irgendeinem der Ansprüche 13 bis 15, **gekennzeichnet durch** einen Prozessor (14), der angepasst ist, ein Kommunikationsprotokoll der mobilen Endgerätevorrichtung in ein Kommunikationsprotokoll umzuwandeln, das von der automobilen Verbindungsvorrichtung für ein mobiles Endgerät unterstützt wird.

17. System nach irgendeinem der Ansprüche 13 bis 16, **gekennzeichnet durch** eine Ladeeinrichtung (16), die angepasst ist, eine Batterie des mobilen Endgeräts zu laden.

18. System nach irgendeinem der Ansprüche 13 bis 17, angepasst, um der automobilen Verbindungsvorrichtung für ein mobiles Endgerät unabhängig von der Schnittstelle der verbundenen mobilen Endgerätevorrichtung einen vorbestimmten Typ von Schnittstelle eines mobilen Endgeräts bereitzustellen.

## Revendications

1. Procédé, comprenant l'étape consistant à :
- adapter une matrice de fonctionnalités téléphoniques d'un dispositif de connexion de terminal mobile pour automobiles à des capacités de fonction d'un dispositif de terminal mobile connecté audit dispositif de connexion de terminal mobile pour automobiles en
- recevant des données contenant une indication concernant lesdites capacités de fonction supportées par ledit dispositif de terminal mobile ;
- réécrivant ladite matrice de fonctionnalités téléphoniques selon lesdites données reçues ; et
- envoyant ladite matrice de fonctionnalités à un contrôleur central de voiture pour permettre audit contrôleur central de voiture de construire une interface utilisateur correspondant à ladite matrice de fonctionnalités.

2. Procédé selon la revendication 1, dans lequel lesdites données contenant ladite indication desdites capacités de fonction sont reçues en provenance d'un support de terminal mobile.

3. Procédé selon la revendication 1, dans lequel lesdites données contenant ladite indication desdites capacités de fonction sont reçues en provenance dudit dispositif de terminal mobile.

4. Procédé selon l'une quelconque des revendications précédentes, comprenant en outre l'étape consistant à :
- demander lesdites données contenant ladite indication desdites capacités de fonction audit dispositif de terminal mobile.

5. Procédé selon l'une quelconque des revendications précédentes, dans lequel lesdites données contenant ladite indication desdites capacités de fonction sont reçues en provenance dudit dispositif de terminal mobile en demandant le type et la version du logicielle de celui-ci.

6. Procédé selon l'une quelconque des revendications 2, 4 ou 5, lorsqu'elle dépend de la revendication 2, dans lequel lesdites données contenant ladite indication desdites capacités de fonction sont fournies audit dispositif de connexion de terminal mobile pour automobiles par ledit support de terminal mobile qui détermine le type et la version logicielle à partir dudit dispositif de terminal mobile.

7. Produit-programme informatique comprenant des moyens de code de programme stockés sur un support lisible par ordinateur pour réaliser le procédé selon l'une quelconque des revendications précédentes lorsque ledit produit-programme est exécuté sur un ordinateur ou un dispositif de réseau.

8. Dispositif de connexion de terminal mobile pour automobiles, comprenant:
- une interface (22) adaptée pour se connecter à un contrôleur central de voiture (18) ;
- un connecteur (20) adapté pour se connecter à un support de terminal mobile, qui est adapté pour recevoir physiquement un dispositif de terminal mobile, ou à une connexion câblée directe à un dispositif de terminal mobile ;
**caractérisé**
**par** une matrice de fonctionnalités téléphoniques qu i comprend une indication de capacités de fonction dudit dispositif de terminal mobile ; et
en ce que ledit dispositif de connexion de terminal mobile pour automobiles est adapté pour :
- recevoir des données contenant une indication concernant des capacités de fonction supportées par ledit dispositif de terminal mobile ;
- réécrire ladite matrice de fonctionnalités téléphoniques selon lesdites données reçues ; et
- envoyer ladite matrice de fonctionnalités audit contrôleur central de voiture pour permettre audit contrôleur central de voiture de construire une interface utilisateur correspondant à ladite matrice de fonctionnalité.

9. Dispositif de connexion de terminal mobile pour automobiles selon la revendication 8, adapté pour demander des données audit dispositif de terminal mobile, lesdites données contenant une indication desdites capacités de fonction.

10. Dispositif de connexion de terminal mobile pour automobiles selon la revendication 8 ou 9, adapté pour demander lesdites données contenant ladite indication concernant lesdites capacités de fonction dudit dispositif de terminal mobile audit support de terminal mobile.

11. Dispositif de connexion de terminal mobile pour automobiles selon la revendication 8 ou 9, adapté pour demander lesdites données contenant ladite indication concernant lesdites capacités de fonction dudit dispositif de terminal mobile audit dispositif de terminal mobile.

12. Dispositif de connexion de terminal mobile pour automobiles selon l'une quelconque des revendications 8 à 10, adapté pour demander le type et la version du logicielle dudit dispositif de terminal mobile.

13. Système, comprenant :
- un dispositif de connexion de terminal mobile pour automobiles selon l'une quelconque des revendications 8 à 12 ; et
- un support de terminal mobile pour recevoir physiquement un dispositif de terminal mobile, comprenant un connecteur (24) adapté pour se connecter audit dispositif de connexion de terminal mobile pour automobiles et un dispositif d'interface (12) adapté pour demander des données et pour envoyer des données audit dispositif de terminal.

14. Système selon la revendication 13, adapté pour demander des données audit dispositif de terminal mobile, lesdites données contenant une indication concernant des capacités de fonction dudit dispositif de terminal mobile.

15. Système selon l'une quelconque des revendications 13 à 14, comprenant un stockage contenant une indication concernant lesdites capacités de fonction dudit dispositif de terminal mobile.

16. Système selon l'une quelconque des revendications 13 à 15, **caractérisé par** un processeur (14) adapté pour convertir un protocole de communication dudit dispositif de terminal mobile en un protocole de communication supporté par ledit dispositif de connexion de terminal mobile pour automobiles.

17. Système selon l'une quelconque des revendications 13 à 16, **caractérisé par** un chargeur (16) adapté pour charger la batterie dudit terminal mobile.

18. Système selon l'une quelconque des revendications 13 à 17, adapté pour fournir un type prédéterminé d'interface de terminal mobile audit dispositif de connexion de terminal mobile pour automobiles indépendamment de l'interface du dispositif de terminal mobile connecté.
